**Europäisches Patentamt**

**European Patent Office**

**Office européen des brevets**

(19)

(11) Veröffentlichungsnummer: **0 012 193**
**B1**

(12) **EUROPÄISCHE PATENTSCHRIFT**

(45) Veröffentlichungstag der Patentschrift:
05.05.82

(51) Int. Cl.³: **F 16 K 7/18**, F 16 K 31/06

(21) Anmeldenummer: **79104138.7**

(22) Anmeldetag: **25.10.79**

(54) **Ventil mit abrollbaren Dichtbändern.**

(30) Priorität: **09.12.78 DE 2853231**

(43) Veröffentlichungstag der Anmeldung:
**25.06.80 Patentblatt 80/13**

(45) Bekanntmachung des Hinweises auf die Patenterteilung:
**05.05.82 Patentblatt 82/18**

(84) Benannte Vertragsstaaten:
**AT BE CH FR GB IT LU NL SE**

(56) Entgegenhaltungen:
**CH-A-258 937**
**DE-A-1 650 394**
**DE-A-1 650 608**
**DE-B-2 218 987**
**US-A-3 467 139**
**US-A-3 605 546**
**US-A-3 905 576**

(73) Patentinhaber: **Concordia Fluidtechnik GmbH,**
**Talstrasse 41, D-7000 Stuttgart 1 (DE)**

(72) Erfinder: **Stähle, Kurt, Gemmingenstrasse 8,**
**D-7531 Steinegg/Pforzheim (DE)**

(74) Vertreter: **Wilhelm, Hans-Herbert, Dr.-Ing. et al,**
**Gymnasiumstrasse 31B, D-7000 Stuttgart 1 (DE)**

Ventil mit abrollbaren Dichtbändern

Die Erfindung betrifft ein Ventil mit einem steuerbar beweglichen Ventilkörper, der aus zwei elastischen, gebogenen Dichtbändern besteht, die im Bereich ihrer benachbarten Flächen aneinander befestigt sind, wobei ein Dichtband an einer Dichtfläche und das andere Dichtband an der Gegenfläche des Gehäuses gehalten ist, welches mindestens an der Dichtfläche mit Zu- und Abführöffnungen für ein strömendes Medium versehen ist.

Ein derartiges Ventil ist z.B. aus der US-A-3 467 139 bekannt. Dort sind zwei U-förmige, elastisch gebogene Dichtbänder in einem Gehäuse untergebracht, wobei die beiden Dichtbänder jeweils mit einem Schenkel am Gehäuse und mit jeweils einem Schenkel aneinander selbst festgelegt sind. Mindestens ein Schenkel der beiden Dichtbänder, der am Gehäuse festgelegt ist, überdeckt eine Einlass- bzw. Auslassöffnung, die je nach Stellung des beweglichen Ventilkörpers geöffnet bzw. geschlossen wird. Der Öffnungs- bzw. Schliessvorgang wird dadurch hervorgerufen, dass an dem von den beiden aneinandergelegten Schenkeln gebildeten Steg eine Kraft angreift, die ein Abrollen der Dichtbänder hervorruft. Soll das Ventil geöffnet werden, so wird durch das Abrollen der Dichtbänder ein Schnappmechanismus bewirkt, der denjenigen Teil des Dichtbandes, der oberhalb der Bohrung im Gehäuse zu liegen kommt, in einer Wölbung oberhalb der Bohrung hält. Wird in entgegengesetzter Richtung abgerollt, so schnappt der gewölbte Teil nach unten auf die Bohrung, so dass das Ventil geschlossen ist. Nachteilig dabei ist, dass sich ein Teil des Dichtbandes auch in geöffneter Stellung des Ventils noch über der Bohrung befindet, und dort einen Widerstand darstellt, der das Eintreten von grösseren Flüssigkeitsmengen hemmt. Ausserdem ist nachteilig, dass das Ventil nur durch eine mechanische Anlenkung an den beiden zusammengebrachten Schenkeln betätigt werden kann, so dass die Steuerung nur direkt und damit relativ umständlich erfolgen kann.

Bei einem anderen bekannten Absperrventil (DE-B-2 218 982) sind ebenfalls zwei halbkreisförmig bzw. U-förmig gebogene Dichtbänder vorgesehen, die jeweils einseitig eingespannt sind und im Bereich ihrer aufeinanderweisenden Schenkel an einem Schwimmer befestigt sind, der je nach Auftrieb eine Abrollbewegung der Dichtbänder hervorruft, die dann entsprechend wiederum Zu- oder Abführöffnungen freigeben bzw. verschliessen. Die Betätigungskraft ist hierbei die Auftriebskraft, die auf den Schwimmer wirkt.

Der Erfindung liegt die Aufgabe zugrunde, ein Ventil so auszubilden, dass eine einfache Steuerung auch grosser Nennweiten mit möglichst geringer Betätigungskraft erreicht werden kann.

Die Erfindung besteht darin, dass die Dichtbänder als geschlossene Ringschlaufen ausgebildet sind und zwischen die aneinander befestigten Umfangsbereiche eine als Anschlag am Gehäuse dienende Platte oder dgl. eingesetzt ist, die mit einem aus magnetischem Material bestehenden Teil versehen ist und dass zur Erzeugung der Betätigungskraft eine elektromagnetische Spule vorgesehen ist.

Durch diese Ausgestaltung wird es möglich, das Ventil über einen Elektromagneten zu steuern, dem die zwischen den aneinander befestigten Umfangsbereichen befestigte Platte mit dem magnetischen Teil als Anker dienen kann. Dadurch brauchen keine mechanischen Kräfte mehr an den aneinander angelegten Teilen der Ringschlaufen anzugreifen. Dadurch ist eine sehr einfache Steuerungsmöglichkeit des Ventils gegeben. Gleichzeitig dient die Platte als Anschlag zur Begrenzung des Rückstellwegs der Ringschlaufen.

Zur Verwirklichung des magnetischen Antriebs bestehen grundsätzlich zwei Möglichkeiten. Fliessen die magnetischen Kraftlinien senkrecht zur Bewegungsrichtung der beiden Ringschlaufen, dann kann der magnetische Teil vorteilhaft aus zwei jeweils in den von einer Ringschlaufe eingeschlossenen Raum hereinragenden Lappen bestehen, die etwa in der Bewegungsrichtung und senkrecht zu der vorher erwähnten, zwischen die Ringschlaufen eingefügten Platte stehen. Werden die Lappen entweder selbst unter einem kleinen Winkel zu der senkrecht auf der Platte und in Bewegungsrichtung liegenden Ebene gestellt oder mit einem entsprechend abgewinkelten Bereich versehen, dann ergibt sich bei einer Beaufschlagung mit einem magnetischen Feld und bei einer entsprechenden Zuordnung von magnetischen Gegenflächen eines magnetischen Joches eine sehr einfache und wirksame Betätigung.

Wird die Anordnung so getroffen, dass die magnetischen Kraftlinien in der Bewegungsrichtung verlaufen, so ergibt sich eine einfache Ausführung dann, wenn der magnetische Teil ein in dem von einer Ringschlaufe umschlossenen Raum liegender Stab ist. Diese Ausführungsform weist auch den Vorteil auf, dass jeweils zwei oder mehr Doppelschlaufen (zwei Ringschlaufen bilden eine Doppelschlaufe) im gleichen Magnetfeld liegen können, das von aussen erzeugt wird. Bei dieser Ausführungsform können beispielsweise zwei Doppelschlaufen vorgesehen sein, die parallel zueinander jeweils in einem Führungsteil gehalten sind, der von einem gemeinsamen Magnetteil umgeben ist. Eine Doppelschlaufe kann den magnetischen Stab dabei im Bereich einer Endschlaufe und die andere an der entgegengesetzten Endschlaufe vorgesehen haben. Wird dann jede Doppelschlaufe von einer jeweils entgegegesetzt zu der anderen wirkenden Rückstellkraft beaufschlagt, was entweder durch entsprechende Schrägstellung von Dicht- und Gegenfläche, oder durch die Anordnung von Rückstellfedern möglich ist, dann lässt sich durch diese Ausgestaltung eine Ausführungsform eines Ventils verwirklichen, das alle Anschlüsse auf einer Seite hat, dennoch aber einen Teil der Öffnungen bei Magnetbeaufschlagung schliesst und den anderen freigibt. Diese Ausführungsform lässt daher die Ausbildung von Mehrwege-Ventilen zu, insbesondere, wenn die zu verschliessenden Öffnungen im Gehäuse untereinander entsprechend verbunden werden oder wenn noch mehr als zwei Doppelschlaufenpaare vorgesehen sind.

Die Erfindung eröffnet aber auch die Möglichkeit, mit nur einer Doppelschlaufe oder auch nur mit einer Ringschlaufe ein gleichzeitig einen Teil von Öffnungen schliessendes und einen anderen Teil freigebendes Ventil zu schaffen, wenn jeweils eine Öffnung im Bereich einer Endschlaufe liegt. Schliesslich ist es auch noch denkbar und möglich, die Dichtfläche mit mehreren quer zur Bewegungsrichtung liegenden Zu- oder Abführöffnungen zu versehen, wodurch einmal ohne Hubvergrösserung die Durchflussmenge bzw. die Nennweite vergrössert werden kann und zum anderen aber auch die Möglichkeit besteht, nur eine Reihe von Öffnungen im Bereich einer Endschlaufe vorzusehen und einen Teil, vorzugsweise die Hälfte dieser Öffnungen, zur Zufuhr des zu steuernden Mediums und den anderen Teil zur Abfuhr des Mediums aus dem Gehäuse auszulegen, so dass Durchflusswege mit grosser Nennweite beim Abrollen der Ringschlaufe freigegeben oder verschlossen werden können. Im Falle der Halbierung der überdeckten bzw. freigegebenen Öffnungsteile in Zu- und Abflusshälften arbeitet das Ventilsystem richtungsneutral in bezug auf Anströmung und Druck. Diese Ausbildung lässt sich natürlich auch verwirklichen, wenn beiden Endschlaufen jeweils eine Reihe von Öffnungen zugeordnet ist.

Wenn die Dichtfläche und die Gegenfläche unter einem Winkel gegeneinander geneigt sind, ergibt sich der Vorteil, dass von den beiden Ringschlaufen die Rückstellkraft selbst aufgebracht werden kann, so dass der Elektromagnet nur in einer Richtung zu wirken braucht.

In der Zeichnung ist die Erfindung anhand von zwei Ausführungsbeispielen dargestellt und in der nachfogenden Beschreibung erläutert. Es zeigen:

Fig. 1 eine Seitenansicht eines neuen Elektromagnetventils, bei dem die elektromagnetischen Kraftlinien quer zur Bewegungsrichtung des Ventilkörpers verlaufen,

Fig. 2 die Draufsicht auf das Ventil der Fig. 1,

Fig. 3 einen Längsschnitt durch die Ausführungsform der Fig. 1, bei dem zwei Ringschlaufen als Ventilkörper im Inneren des Gehäuses angeordnet sind,

Fig. 4 einen Querschnitt längs der Linie IV-IV durch die Fig. 3,

Fig. 5 eine Draufsicht auf die Grundplatte des Ventils der Figuren 1 bis 4,

Fig. 6 den aus zwei untereinander verbundenen Ringschlaufen aus elastischem Material gebildeten Ventilkörper,

Fig. 7 die Draufsicht auf den Ventilkörper der Fig. 6,

Fig. 8 den Schnitt durch die Fig. 6 in Richtung der Linie VIII-VIII,

Fig. 9 einen Querschnitt durch eine andere Ausführungsform eines erfindungsgemäss ausgestalteten Elektromagnetventils,

Fig. 10 den Schnitt längs der Linie X-X durch Fig. 9,

Fig. 11 die Draufsicht auf das Ventil der Fig. 9,

Fig. 12 einen der beiden aus zwei miteinander verbundenen Ringschlaufen gebildeten Ventilkörper der Ausführungsform der Fig. 9 und

Fig. 13 den Schnitt durch den Ventilkörper der Fig. 12 längs der Linie XIII-XIII.

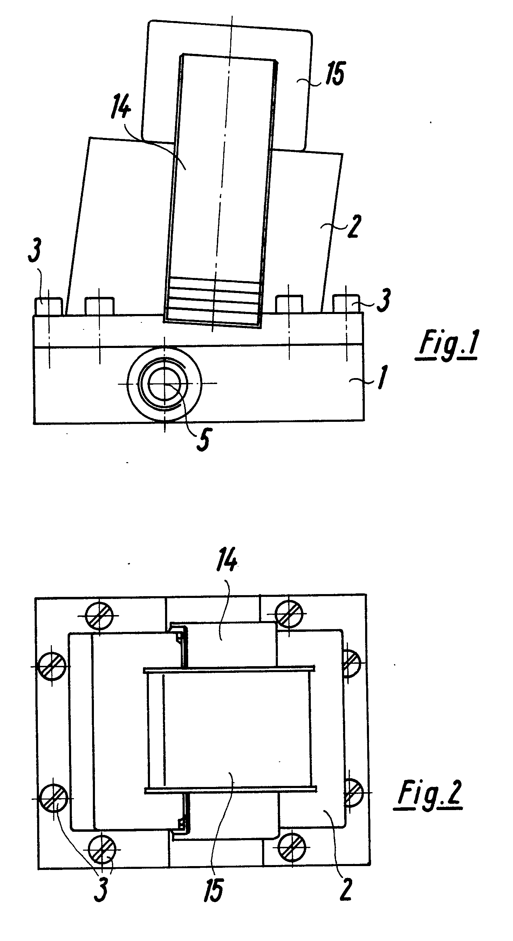

In den Fig. 1 bis 4 ist ein Elektromagnetventil gezeigt, das beispielsweise als Pilotventil zur Steuerung grösserer pneumatisch wirkender Ventile eingesetzt werden kann. Das Ventil besteht aus einer Grundplatte 1, auf die ein haubenförmiger Gehäuseteil 2 aufgesetzt ist. Der Gehäuseteil 2 ist mit der Grundplatte 1 über Schrauben 3 verbunden. In der Grundplatte 1 sind Anschlussbohrungen 4 und 5 vorgesehen, die an die Druckzufuhr- oder an Druckabfuhrleitungen angeschlossen werden können. Die Anschlussbohrung 5 ist dabei seitlich von der Grundplatte 1 aus zugängig, während die Anschlussbohrung 4 von unten durch die Grundplatte 1 hindurchführt und in den Ventilraum 6 hereinreicht, der innerhalb des haubenförmigen Oberteiles 2 gebildet ist. Die Anschlussbohrungen 5 sind mit Verbindungsbohrungen 7 versehen, die an der Oberfläche 8 der Grundplatte 1 münden. Diese Oberfläche 8 stellt, wie noch beschrieben werden wird, die Dichtfläche des Ventils dar.

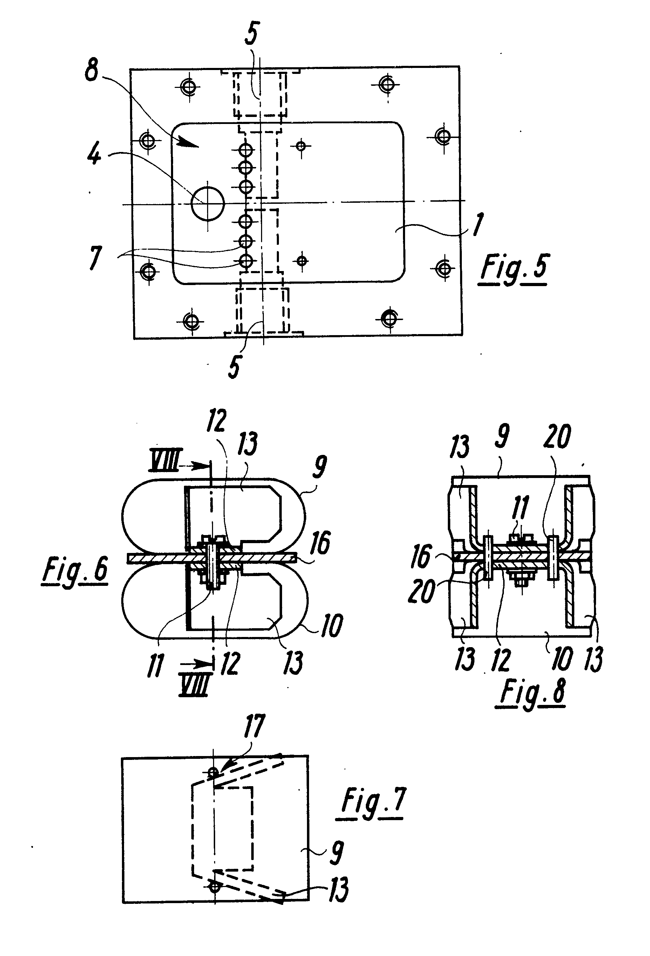

In dem Ventilraum 6 sind zwei im einzelnen in den Fig. 6 bis 8 gezeigte Ringschlaufen 9 und 10 angeordnet, die beispielsweise aus einem oder mehreren aufeinandergelegten Metallbändern bestehen können, deren Enden übereinander zu den Schlaufen 9 und 10 gelegt sind. Beide Ringschlaufen sind auf der einander zugewandten Seite untereinander durch mindestens eine Schraube 11 verbunden, mit der gleichzeitig zwei Platten 12 befestigt sind, welche jeweils seitlich hochgebogene Schenkel 13 besitzen, die zu Lappen ausgebildet sind, welche im wesentlichen senkrecht zu der Platte 12 stehen und in der Bewegungsrichtung der Platte 12 verlaufend angeordnet sind. Wie im einzelnen aus den Fig. 6, 7 und 8 hervorgeht, sind die Lappen 13 unter einem geringen Winkel zu dieser Bewegungsrichtung und damit auch zu den Wänden 2a des Gehäuseteiles 2 angeordnet. Sie bilden daher mit diesen Wänden 2a einen keilförmigen Spalt, der für die magnetische Betätigung von Bedeutung ist. Um den Gehäuseteil 2 herum sind nämlich U-förmige Bleche 14 zur Bildung eines Magnetjoches gelegt, deren Schenkel fast bis zur Grundplatte 1 reichen und deren gemeinsamer Steg von einer Elektromagnetspule 15 umgeben ist, die oberhalb des Gehäuseteiles 2 sitzt. Um zu sichern, dass sich die Lappen 13 aus ihrer eingestellten Lage nicht gegenüber den Ringschlaufen 9 und 10 verdrehen, sind Sicherungsstifte 20 vorgesehen, welche sowohl die Platten 12 als auch die Zwischenplatte 16 durchdringen.

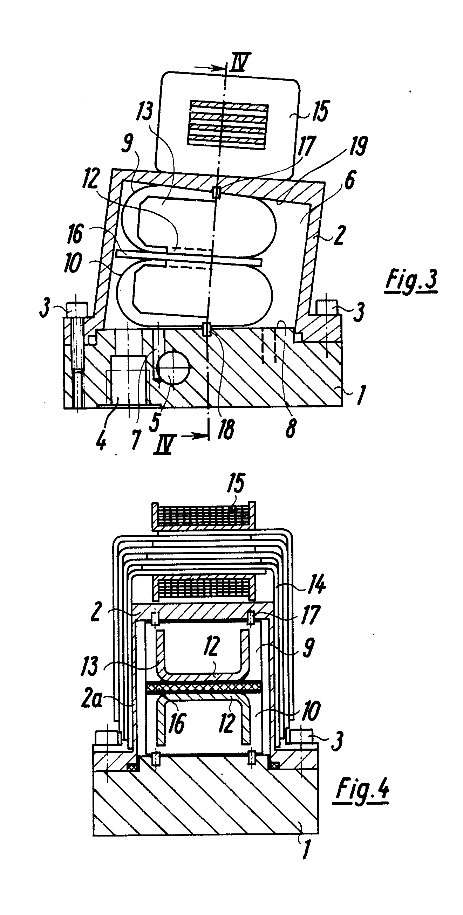

Die beiden Ringschlaufen 9 und 10 nehmen zwischen sich und zwischen den Platten 12 eine aus nicht magnetischem Material bestehende Zwischenplatte 16 auf, die, wie aus Fig. 3 hervorgeht, als Endanschlag für eine Stellung der aus den beiden Ringschlaufen 9 und 10 gebildeten Doppelschlaufe dient. Um diese stabile Endstellung zu erreichen, sind einmal die beiden Ringschlaufen 9 und 10 jeweils über Arretierungsstifte 17 und 18 mit der Haube 2 bzw. mit der Grundplatte 1 verbunden. Zum anderen ist die innerhalb der Haube 2 gebildete Anlagefläche 19 für die Ringschlaufe 9, die als Gegenfläche zu der Dichtfläche 8 dient, unter einem Winkel zu der Ebene angeordnet, in der die Dichtfläche 8 liegt. Die Dichtfläche 8 und die Gegenfläche 19 bilden somit eine Art Keil, der sich nach links, also zu der Seite hin, an der die Anschlagplatte 16 am Gehäuse 2 anliegt, erweitert. Diese Ausgestaltung führt dazu, dass aufgrund der elastischen, den Ringschlaufen 9 und 10 jeweils innewohnenden Kräfte die Doppelschlaufenanordnung in die in Fig. 3 gezeigte linke Endstellung gedrückt wird. In dieser Endstellung verschliesst die untere Ringschlaufe 10 die Öffnungen 7. Wird der Elektromagnet 15 jedoch erregt, so bewirken die quer zu der Längsrichtung der Platte 16 stehenden magnetischen Kraftlinien, dass die als Anker dienenden Lappen 13 in das magnetische Feld hereingezogen werden, was durch die Schrägstellung und den ebenfalls keilförmig sich aus dem Magnetfeld heraus verkleinernden Spalt zwischen den Lappen 13 und der Wand 2a gefördert wird. Durch diese Kraftwirkung wird die aus den Ringschlaufen 9 und 10 bestehende Doppelschlaufe nach rechts bewegt und die untere Ringschlaufe 10 rollt somit über der Dichtfläche 8 ab und gibt die Öffnungen 7 frei. Die Anschlüsse 5 stehen daher untereinander und mit dem Anschluss 4 in Verbindung. Je nach Beschaltung kann damit der Zu- oder Abfluss von Druckmittel freigegeben werden.

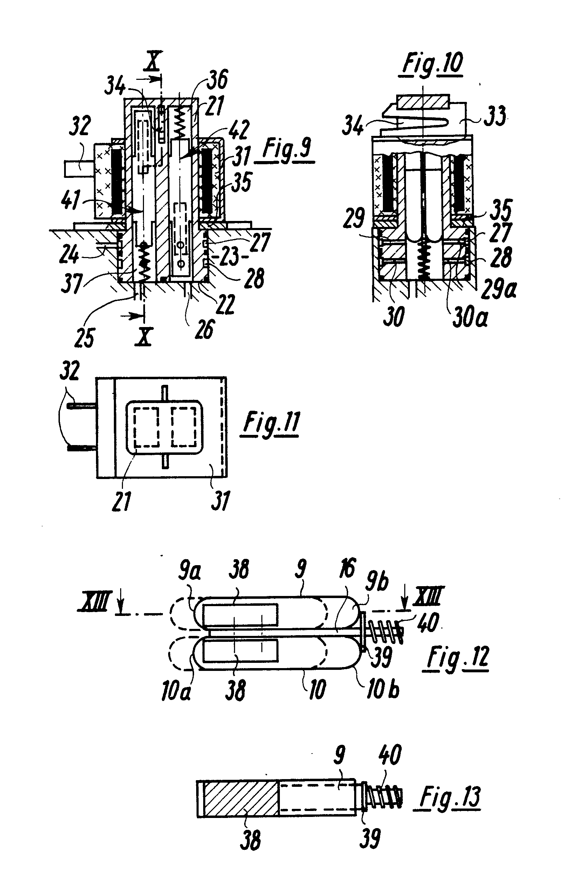

In den Fig. 9 bis 11 ist eine andere Ausführungsform gezeigt, bei der das ganze Ventilgehäuse aus einem einstückig hergestellten Führungsteil 21 besteht, der in seinem unteren Bereich kolbenförmig ausgebildet ist und von oben in eine entsprechende Öffnung 22 in einem Gehäuse 23 oder in einer entsprechenden Platte eingesetzt ist. In diesem Gehäuse 23 sind Anschlussbohrungen 24, 25 und 26 vorgesehen, die in bekannter Weise an Druck, an Atmosphäre oder an anderen Druckquellen oder Leitungen anschliessbar sind. Von diesen Anschlussöffnungen sind Verbindungskanäle 27 und 28 am Umfang des Führungsteiles 21 in dessen unterem Bereich verlegt, die wiederum über Stichkanäle 29 und 30 bzw. 29a und 30a jeweils in den Innenraum des Führungsteiles 21 hereingeführt sind. Dabei besitzt der Führungsteil 21 zwei Führungen 36, 37 für Ventilkörper, die ähnlich jenen aufgebaut sind, wie sie anhand der Fig. 1 bis 8 erläutert wurden und wie sie im einzelnen in den Fig. 12 und 13 dargestellt sind. Der Aufbau dieser Ventilkörper wird noch erläutert werden. Der Führungsteil 21 ist von einer Magnetspule 31 umgeben, deren Kraftlinien im Gegensatz zu jener der ersten Ausführungsform in der Bewegungsrichtung der Ventilkörper verlaufen, die im Führungsteil 21 angeordnet sind. Anschlusslaschen 32 zur Stromversorgung dieser Spule 31 sind in bekannter Weise ausgebildet. Die Spule 31 ist aussen über den etwa mit rechteckigem Querschnitt versehenen Führungsteil 21 übergeschoben und wird durch eine Rastklammer 33 in ihrer Lage gesichert, die quer durch einen Schlitz 34 im Führungsteil 21 durchgesteckt ist. Durch diese Ausgestaltung wird der gesamte Führungsteil auch an einer Halteplatte 35 gesichert, mit der die Befestigung auf dem Gehäuse 23 erfolgt.

Im Inneren des Führungsteiles 21 sind in jeder der beiden Führungen 36 und 37, die gleich ausgebildet sind, jeweils wieder zwei Ringschlaufen 9 und 10 angeordnet, die mit einer Zwischenplatte 16 versehen und aneinander befestigt sind. Anstelle der Platten 12 mit den Lappen 13 ist an der Platte 16 und an den beiden Ringschlaufen 9 und 10 jedoch jeweils ein stabförmiger Körper 38 befestigt, der aus magnetischem Material besteht. Der Körper 38 liegt jeweils so im Inneren der Ringschlaufen 9 und 10, dass er in der in Fig. 12 gezeigten rechten Endlage der abrollenden Ringschlaufe 9 und 10 die linke Endschlaufe 9a bzw. 10a nicht berührt. An der Platte 16 ist ein Anschlag 39 vorgesehen, an den sich eine Rückstellfeder 40 legt, die im eingebauten Zustand (siehe Fig. 9 und 10) dafür sorgt, dass die jeweils zugeordnete Doppelschlaufe 9, 10 dann, wenn der Magnet 31 nicht strombeaufschlagt ist, eine definierte Endstellung einnimmt. Wie aus Fig. 9 zu entnehmen ist, sind dabei die beiden Endstellungen der Doppelschlaufen, die hier der Deutlichkeit halber mit 41 und 42 gesondert bezeichnet sind, jeweils verschieden, wobei die linke Doppelschlaufe 41 nach oben und die rechte Doppelschlaufe 42 nach unten verschoben ist. Dadurch liegen einmal die jeder Schlaufe zugeordneten Stäbe 38 ausserhalb der Zone, die von den Magnetkraftlinien des Elektromagneten 31 unmittelbar durchquert werden, zum anderen werden die Bohrungen 29 und 30 in den beiden Führungen 36 und 37 einmal verschlossen und zum anderen freigegeben. So gibt die linke Doppelschlaufe 41 die beiden Bohrungen frei, während die rechte Doppelschlaufe 42 ihre zugeordneten Eintrittsbohrungen verschliesst. Bei Strombeaufschlagung der Spule tritt eine Wechselwirkung ein. Die Doppelschlaufe 42 gibt die zugeordneten Bohrungen frei, während die Doppelschlaufe 41 die zugeordneten Bohrungen verschliesst, weil sie gegen die Wirkung der Rückstellfeder 40 nach unten gedrückt wird. Durch geeignete Anordnung der Verbindungskanäle zwischen den Anschlüssen 24 bis 26 und den Bohrungen 29 und 30 kann auf diese Weise eine Vielzahl von Mehrwege-Ventilen verwirklicht werden. Es ist natürlich auch möglich, anstelle von nur zwei Doppelschlaufen auch mehrere in einem Magnetfeld anzuordnen.

**Ansprüche**

1. Ventil mit einem steuerbar beweglichen Ventilkörper, der aus zwei elastischen, gebogenen Dichtbändern (9, 10) besteht, die im Bereich ihrer benachbarten Flächen aneinander befestigt sind, wobei ein Dichtband (10) an einer Dichtfläche (8) und das andere Band (9) an der Gegenfläche (19) des Gehäuses (1, 2) gehalten und abrollbar ist, welches mindestens an der Dichtfläche mit Zu- und Abführöffnungen (4, 7) für ein strömendes Medium versehen ist, dadurch gekennzeichnet, dass die Dichtbänder als geschlossene Ringschlaufen (9, 10) ausgebildet sind und zwischen die aneinander befestigten Umfangsbereiche eine als Anschlag am Gehäuse (2) dienende Platte (16) oder dgl. eingesetzt ist, die mit einem aus magnetischem Material bestehenden Teil (13, 38) versehen ist und dass zur Erzeugung der Betätigungskraft eine elektromagnetische Spule (15, 31) vorgesehen ist.

2. Ventil nach Anspruch 1, dadurch gekennzeichnet, dass der magnetische Teil aus zwei jeweils in den von einer Ringschlaufe (9, 10) eingeschlossenen Raum hereinragenden Lappen (13) besteht, die etwa in der Bewegungsrichtung des Ventilkörpers und senkrecht zu der Platte (16) stehen.

3. Ventil nach Anspruch 2, dadurch gekennzeichnet, dass die Lappen (13) entweder selbst unter einem kleinen Winkel zu einer senkrecht auf der Platte (16) und in der Bewegungsrichtung liegenden Ebene stehen oder mit einem entsprechend abgewinkelten Bereich versehen sind, der mit einer in Bewegungsrichtung liegenden magnetischen Gegenfläche (2a) zusammenwirkt.

4. Ventil nach Anspruch 3, dadurch gekennzeichnet, dass die Gegenfläche (2a) Teil eines magnetischen Joches (2a, 14) ist, durch das die magnetischen Kraftlinien senkrecht zur Bewegungsrichtung fliessen.

5. Ventil nach Anspruch 4, dadurch gekennzeichnet, dass dem magnetischen Joch (2a, 14) die elektromagnetische Spule (15) zugeordnet ist.

6. Ventil nach Anspruch 1, dadurch gekennzeichnet, dass der magnetische Teil ein in dem von einer Ringschlaufe (9, 10) umschlossenen Raum liegender Stab (38) ist.

7. Ventil nach Anspruch 6, dadurch gekennzeichnet, dass die elektromagnetische Spule (31) der oder den Ringschlaufen (9, 10, 41, 42) so zugeordnet ist, dass die magnetischen Feldlinien in der Bewegungsrichtung der Schlaufen bzw. der Stäbe (38) liegen.

8. Ventil nach den Ansprüchen 6 und 7, dadurch gekennzeichnet, dass jeweils zwei oder mehr Doppelschlaufen (41, 42) im gleichen Magnetfeld liegen.

9. Ventil nach Anspruch 8, dadurch gekennzeichnet, dass zwei Doppelschlaufen (41, 42) vorgesehen sind, die parallel zueinander jeweils in einer Führung (36, 37) eines Führungsteils (21) gehalten sind, der von einem gemeinsamen Magnetteil (31) umgeben ist und dass eine Doppelschlaufe (41) den magnetischen Stab (38) im Bereich einer Endschlaufe (9a) und die andere Doppelschlaufe (42) an der entgegengesetzten Endschlaufe (10b) angebracht hat.

10. Ventil nach Anspruch 9, dadurch gekennzeichnet, dass jede Doppelschlaufe (41, 42) von einer jeweils entgegengesetzt zu der anderen wirkenden Rückstellkraft (40) beaufschlagt ist.

11. Ventil nach den Ansprüchen 9 und 10, dadurch gekennzeichnet, dass den nicht mit den Stäben (38) versehenen Endschlaufen (9b, 10b) Rückstellfedern (40) zugeordnet sind.

12. Ventil nach Anspruch 9, dadurch gekennzeichnet, dass der Führungsteil (21) für die Doppelschlaufen (41, 42) kolbenförmig ausgebildet und als Baueinheit in eine Bohrung in einem Ventilgehäuse (23) eingesetzt ist.

13. Ventil nach Anspruch 12, dadurch gekennzeichnet, dass auf den kolbenförmigen Führungsteil (21) der Magnetteil (31) aufgesteckt ist.

14. Ventil nach Anspruch 1, dadurch gekennzeichnet, dass die Dichtfläche (8) eine oder mehrere, quer zur Bewegungsrichtung des Ventilkörpers liegende Zu- oder Abführöffnungen (7) aufweist.

15. Ventil nach Anspruch 14, dadurch gekennzeichnet, dass eine Reihe von Öffnungen (7) oder eine Öffnung allein jeweils im Bereich einer Endschlaufe (9a, 9b) der Ringschlaufe(n) (9, 10) liegt oder liegen.

16. Ventil nach Anspruch 14, dadurch gekennzeichnet, dass nur eine Reihe von Öffnungen (7) vorgesehen ist und ein Teil, vorzugsweise die Hälfte dieser Öffnungen, zur Zufuhr des zu steuernden Mediums und der andere Teil zur Abfuhr des Mediums aus dem Gehäuse (1, 2) dient.

17. Ventil nach Anspruch 1, dadurch gekennzeichnet, dass die Dichtfläche (8) und die Gegenfläche (19) unter einem Winkel gegeneinander geneigt sind.

18. Ventil nach Anspruch 1, dadurch gekennzeichnet, dass die Ringschlaufen (9, 10) aus mehreren aufeinandergeschichteten Einzelbändern aufgebaut sind.

**Claims**

1. Valve having a controllably movable valve body, consisting of two elastic, bent sealing strips (9, 10) which are secured to each other in the region of their adjacent faces, one sealing strip (10) being held on one sealing face (8) while the other strip (9) is held on the mating face (19) of the housing (1, 2) which is provided with inlet and outlet apertures (4, 7) for a flowing medium at least on the sealing surface, characterised in that the sealing strips are constructed as closed annular loops (9, 10) and in that between the peripheral zones which are fixed to one another there is inserted a plate (16) or the like which serves as an abutment on the housing (2), the said plate being provided with a part (13, 38) consisting of magnetic material and in that an electromagnetic coil (15, 31) is provided to generate the actuating force.

2. Valve according to claim 1, characterised in that the magnetic part consists of two lugs (13) which protrude into the space enclosed by an annular loop (9, 10), the lugs being approximately at a right-angle to the plate (16) in the direction of movement of the valve body.

3. Valve according to claim 2, characterised in that the lugs (13) are either themselves at a small angle to a plane located at right-angles to the plate (16) and in the direction of movement or are provided with a correspondingly angled zone which co-operates with a magnetic mating face (2a) located in the direction of movement.

4. Valve according to claim 3, characterised in that the mating face (2a) is part of a magnetic yoke (2a, 14) through which the lines of magnetic force flow at a right-angle to the direction of movement.

5. Valve according to claim 4, characterised in that the electromagnetic coil (15) is associated with the magnetic yoke (2a, 14).

6. Valve according to claim 1, characterised in that the magnetic part is a rod (38) located in the space which is enclosed by an annular loop (9, 10).

7. Valve accordig to claim 6, characterised in that the electromagnetic coil (31) is so associated with the annular loop or loops (9, 10, 41, 42) that the lines of magnetic force lie in the direction of movement of the loops or rods (38).

8. Valve according to claim 6 and 7, characterised in that in each case two or more double loops (41, 42) lie in the same magnetic field.

9. Valve according to claim 8, characterised in that two double loops (41, 42) are provided which are held parallel with each other in each case in a guide (36, 37) of a guide part (21) which is enclosed by a common magnetic part (31) and in that one double loop (41) has applied the magnetic rod (38) in the region of an end loop (9a) and the other double loop (42) on the opposite end loop (10b).

10. Valve according to claim 9, characterised in that each double loop (41, 42) is subject to a restoring force (40) acting in opposition to the other restoring force.

11. Valve according to the claims 9 and 10, characterised in that restoring springs (14) are associated with the end loops (9b, 10b) which are not provided with the rods (38).

12. Valve according to claim 9, characterised in that the guide part (21) is constructed to be piston shaped for the double loops (41, 42) and is inserted as a component unit into a bore in a valve housing (23).

13. Valve according to claim 10, characterised in that the magnetic part (31) is fitted onto the piston shaped guide part (21).

14. Valve according to claim 1, characterised in that the sealing face (8) has one or a plurality of inlet or outlet apertures (7) disposed transversely of the direction of movement of the valve body.

15. Valve according to claim 14, characterised in that a row of apertures (7) or one aperture only can be found in each case in the region of an end loop (9a, 9b) of the annular loops (9, 10).

16. Valve according to claim 14, characterised in that only one row of apertures (7) is provided and in that one part, preferably half of these apertures, serves for the supply of medium to be controlled while the other part serves to carry the medium out of the housing (1, 2).

17. Valve according to claim 1, characterised in that the sealing face (8) and the mating face (19) are inclined at an angle to each other.

18. Valve according to claim 1, characterised in that the annular loops (9, 10) are made up from a plurality of individual strips layered one upon another.

**Revendications**

1. Soupape avec un corps de soupape mobile susceptible d'être commandé, constituée de deux bandes d'étanchement élastiques courbées (9, 10), fixées l'une sur l'autre dans la zone de leurs surfaces voisines, l'une (10) de ces bandes d'étanchement étant maintenue en étant susceptible de rouler contre une surface d'étanchement (8) du boîtier (1, 2) tandis que l'autre bande (9) est maintenue en étant susceptible de rouler contre la surface antagoniste (19) du boîtier (1, 2), lequel est muni, au moins sur la surface d'étanchement, d'orifices d'amenée et d'évacuation (4, 7) pour un fluide en circulation, soupape caractérisée en ce que les bandes d'étanchement revêtent la forme de boucles annulaires (9, 10) fermées tandis qu'entre leurs parties périphériques fixées l'une à l'autre est insérée une plaque (16) ou un organe analogue servant de butée contre le boîtier (2), cette plaque étant munie d'une partie (13, 38) constituée d'un matériau magnétique, cependant que pour produire l'effort de manoeuvre, il est prévu une bobine électro-magnétique (15, 31).

2. Soupape selon la revendication 1, caractérisée en ce que la partie magnétique est constituée de deux pattes (13) faisant respectivement saillie dans l'espace entouré par une boucle annulaire (9, 10), ces pattes étant placées à peu près dans la direction de déplacement du corps de soupape et étant perpendiculaires à la plaque (16).

3. Soupape selon la revendication 2, caractérisée en ce que les pattes (13), ou bien forment un léger angle par rapport à un plan per-

pendiculaire à la plaque (16) et parallèle à la direction de déplacement, ou bien sont pourvues d'une zone décalée angulairement de façon correspondante, qui coopère avec une surface antagoniste magnétique (2a) placée selon la direction de déplacement.

4. Soupape selon la revendication 3, caractérisée en ce que la surface antagoniste (2a) fait partie d'une culasse magnétique (2a, 14) par l'intermédiaire de laquelle les lignes de force magnétique s'étendent perpendiculairement à la direction de déplacement.

5. Soupape selon la revendication 4, caractérisée en ce qu'à la culasse magnétique (2a, 14) est associée la bobine électro-magnétique (15).

6. Soupape selon la revendication 1, caractérisée en ce que la partie magnétique est un barreau (38) placé dans l'espace enfermé par une boucle annulaire (9, 10).

7. Soupape selon la revendication 6, caractérisée en ce que la bobine électro-magnétique (31) est associée à la boucle annulaire, ou bien aux boucles annulaires (9, 10, 41, 42) de façon telle que les lignes du champ magnétique sont dans la direction de déplacement des boucles ou des barreaux (38).

8. Soupape selon les revendications 6 et 7, caractérisée en ce que, respectivement, deux ou plusieurs boucles doubles (41, 42) sont placées dans le même champ magnétique.

9. Soupape selon la revendication 8, caractérisée en ce qu'il est prévu deux boucles doubles (41, 42), qui sont maintenues parallèlement l'une à l'autre respectivement dans un guidage (36, 37) d'une pièce de guidage (21), entourées d'une partie magnétique commune (31), cependant que pour l'une (41) des boucles doubles, le barreau magnétique (38) est monté au voisinage d'une boucle terminale (9a) tandis que pour l'autre boucle double (42) il est monté contre la boucle terminale opposée (10b).

10. Soupape selon la revendication 9, caractérisée en ce que chaque boucle double (41, 42) est sollicitée par un ressort de rappel (40) agissant à l'opposé de l'autre.

11. Soupape selon les revendications 9 et 10, caractérisée en ce que les ressorts de rappel (40) sont associés aux boucles d'extrémité (9b, 10b) non munies des barreaux (38).

12. Soupape selon la revendication 9, caractérisée en ce que la pièce de guidage (21) pour les boucles doubles (41, 42) est en forme de piston et est introduite en tant qu'unité constitutive dans un perçage d'un boîtier de soupape (23).

13. Soupape selon la revendication 12, caractérisée en ce que la partie magnétique (31) est enfilée sur la pièce de guidage (21) en forme de piston.

14. Soupape selon la revendication 1, caractérisée en ce que la surface d'étanchement (8) comporte un ou plusieurs orifices d'amenée et d'évacuation (7) placés tranversalement par rapport à la direction de déplacement du corps de soupape.

15. Soupape selon la revendication 14, caractérisée en ce qu'une rangée d'orifices (7) ou bien un orifice unique, sont placés ou bien est placé respectivement au voisinage d'une boucle terminale (9a, 9b) de la boucle annulaire ou bien des boucles annulaires (9, 10).

16. Soupape selon la revendication 14, caractérisée en ce qu'il est prévu seulement une rangée d'orifices (7) et qu'une partie, de préférence la moitié, de ces orifices sert à amener le fluide à commander, tandis que l'autre partie sert à l'évacuation de ce fluide à l'extérieur du boîtier (1, 2).

17. Soupape selon la revendication 1, caractérisée en ce que la surface d'étanchement (8) et la surface antagoniste (19) sont inclinées l'une par rapport à l'autre selon un certain angle.

18. Soupape selon la revendication 1, caractérisée en ce que les boucles annulaires (9, 10) sont constituées de plusieurs bandes individuelles placées l'une sur l'autre.

_Fig.1_

_Fig.2_

*Fig.3*

*Fig.4*

Fig.5

Fig.6

Fig.8

Fig.7

Fig.9

Fig.10

Fig.11

Fig.12

Fig.13